# EUROPÄISCHE PATENTSCHRIFT

(11) **EP 2 082 813 B1**
(45) Veröffentlichungstag und Bekanntmachung des Hinweises auf die Patenterteilung: **08.06.2016**
(21) Anmeldenummer: 08001097.8
(22) Anmeldetag: 22.01.2008
(51) Int. Cl.: B08B 1/00, B08B 1/04, B23K 26/16

(54) **Maschinelle Anordnung zur Wartung und/oder Reinigung von Auflageleisten einer Werkstückauflage**
Mechanical device for maintenance and/or cleaning of support strips of a work piece support
Dispositif mécanique pour l'entretien et/ou le nettoyage de rails de support d'un support de pièces à usiner

(43) Veröffentlichungstag der Anmeldung: 29.07.2009
(73) Patentinhaber: Trumpf Sachsen GmbH, 01904 Neukirch (DE); TRUMPF Werkzeugmaschinen GmbH + Co. KG, 71254 Ditzingen (DE)
(72) Erfinder: Klaiber, Wolf, 71254 Ditzingen (DE); Thonig, Harry, 01904 Neukirch (DE); Vogel, Klaus, 02681 Kirschau OT Rodewitz (DE); Wahl, Eberhard, 73235 Weilheim (DE); Schorn, Utz, 70499 Stuttgart (DE); Petera, Martin, 71065 Sindelfingen (DE); Vincke, Karel, 8730 Oedelem (BE); Gruhl, Norbert, 02627 Hochkirch/OT Lehn (DE)
(74) Vertreter: Kohler Schmid Möbus Patentanwälte

(56) Entgegenhaltungen:
- DE-A1-102004 060 085
- DE-C1- 4 436 551
- DE-U1-202004 015 922
- FR-A- 2 865 154
- US-A- 5 317 943
- US-A- 5 780 805
- US-A- 5 885 363
- US-A1- 2005 116 396
- US-A1- 2007 051 710
- US-B1- 6 437 286

## Beschreibung

Die Erfindung betrifft eine maschinelle Anordnung zur Wartung und/oder Reinigung von Auflageleisten einer Werkstückauflage, die eine Auflageebene zur Lagerung von Werkstücken bildet, mit einer Transportvorrichtung zur Bewegung der Werkstückauflage entlang einer Transportachse X und mit einer Servicevorrichtung, welche ein Werkzeug zur Wartung und/oder Reinigung der Auflageleisten, aufweist.

Werkstückauflagen der vorstehenden Art dienen der Lagerung von Werkstücken z.B. in einer Laserschneidmaschine. Die mit den Werkstücken beladenen Werkstückauflagen werden mittels einer Transportvorrichtung zu der Bearbeitungsmaschine hin und von dieser weg gefördert. Die Werkstückauflagen bilden eine Auflageebene zur Lagerung der Werkstücke durch eine Vielzahl voneinander beabstandet angeordneter Auflageleisten, auf denen die Werkstücke punktuell aufliegen. Als Folge der Werkstückbearbeitung, insbesondere der thermischen Bearbeitung der Werkstücke, lagern sich an den Auflageleisten Verunreinigungen ab, welche die Funktionsfähigkeit der Werkstückauflage beeinträchtigen. Denkbar ist auch ein Anbacken mehrerer Schichten von kleinen Werkstück-, insbesondere von kleinen Blechteilen, an den Auflageleisten. Zudem können sich die Auflageleisten aufgrund von thermischen und mechanischen Beanspruchungen im Betrieb unerwünscht verformen. In gewissen Zeitabständen müssen die Werkstückauflagen daher geprüft, gewartet und gereinigt werden.

Eine maschinelle Servicevorrichtung der vorstehenden Art ist als Reinigungsgerät aus DE 20 2004 015 922 U1 bekannt. Das Reinigungsgerät umfasst Werkzeuge, die beispielsweise aus gegenläufig angetriebenen Reinigungswalzen bestehen, welche beidseitig an eine Auflageleiste einer Werkstückauflage angelegt und zur mechanischen Abtragung der Verunreinigungen entlang der Auflageleiste bewegt werden. Das Reinigungsgerät wird vornehmlich manuell entlang der zu reinigenden Auflageleiste geführt, wobei der Antrieb der Werkzeuge gleichzeitig eine Vorschubkraft für die Vorschubbewegung längs der Auflageleiste erzeugt. Zur Bedienung des Reinigungsgerätes werden zwei Arbeitskräfte eingesetzt, die das Reinigungsgerät entlang der Auflageleiste halten und am Ende jeder Auflageleiste von einer Auflageleiste auf die nächste umsetzen. Dabei muss das Reinigungsgerät um 180° gewendet werden.

Alternativ ist in der genannten Druckschrift auf eine maschinelle Anordnung mit einer nicht näher beschriebenen maschinellen Führung des Reinigungsgerätes verwiesen, bei der die zur Verfügung stehenden Bewegungsachsen der Bearbeitungsmaschine, an der sich die Werkstückauflage befindet, genutzt werden. Zum Beispiel lässt sich das Reinigungsgerät mit Hilfe der Bewegungsachsen des Laserschneidkopfes einer Laserschneidmaschine an den verunreinigten Auflageleisten entlang bewegen. Die Kopplung des Reinigungsgerätes mit den Bewegungsachsen des Laserschneidkopfes bindet Kapazität im Arbeitsbereich der Laserschneidmaschine und schränkt damit die Produktivität der Laserschneidmaschine ein.

Weiterer Stand der Technik ist offenbart in DE 10 2004 060 085 A1 sowie in US 5,317,943 A.

Aus DE 10 2004 060 085 A1 ist eine Vorrichtung zum Reinigen der Auflageleisten eines Auflagetisches bekannt, auf welchem Bleche oder Platten während der Ausführung thermischer Trennverfahren abgelegt sind. Die vorbekannte Reinigungsvorrichtung umfasst eine Bearbeitungseinheit, die an einem stationären Gestell montiert ist. Eine zu reinigende Auflageleiste wird an dem betreffenden Auflagetisch demontiert und anschließend einzeln der Bearbeitungseinheit zugeführt. Nachdem die Auflageleiste die Bearbeitungseinheit durchlaufen hat, wird sie von dem Gestell abgenommen und wieder in den Auflagetisch eingebaut oder in einer Vorratsvorrichtung zwischengelagert. Um eine Auflageleiste der Bearbeitungseinheit zuzuführen, weist die vorbekannte Reinigungsvorrichtung eine an dem Gestell vorgesehene Rollenbahn auf, die über mindestens eine motorbetriebene Antriebsrolle verfügt. Die motorbetriebene Antriebsrolle schiebt eine verunreinigte Auflageleiste in die Bearbeitungseinheit, wo an der Auflageleiste anhaftende Verunreinigungen mittels einer Schlageinheit der Bearbeitungseinheit von der Auflageleiste entfernt werden. Die gereinigte Auflageleiste wird mittels einer motorbetriebenen Antriebsrolle einer zweiten an dem Gestell vorgesehenen Rollenbahn aus der Bearbeitungseinheit abgezogen.

US 5,317,943 A beschreibt eine Werkzeugmaschine zum Schneiden von Pappe mit Hilfe von Fräswerkzeugen, die an einem Werkzeugträger montiert sind. Damit die flexible Pappe während der Bearbeitung auf geeignete Art und Weise gelagert ist, wird die Pappe auf einem vollkommen ebenen Schneidtisch fixiert. Der Werkzeugträger ist in Richtung einer horizontalen Y-Achse sowie in Richtung einer vertikalen Z-Achse beweglich. Der Schneidtisch kann in Richtung einer parallel zu der Y-Achse verlaufenden horizontalen X-Achse bewegt werden.

Das Dokument US-A1-2005/0116396 offenbart eine maschinelle Anordnung gemäß dem Oberbegriff des Anspruchs 1.

Der vorliegenden Erfindung liegt ausgehend von dem gattungsbildenden Stand der Technik die Aufgabe zugrunde, die Automatisierung der Wartung und/oder der Reinigung von Auflageleisten mit geringem technischen Aufwand zu verbessern.

Die Aufgabe wird erfindungsgemäß durch eine maschinelle Anordnung gemäß Patentanspruch 1 und durch eine Bearbeitungsmaschine gemäß Patentanspruch 16 gelöst.

Demnach ist eine maschinelle Anordnung vorgesehen, bei welcher die Servicevorrichtung mittels einer maschinellen Bewegungseinheit in einer zur Transportachse X winkelig angeordneten Bewegungsachse Y und/oder in einer zur Transportachse X winkelig angeordneten, von der Bewegungsachse Y verschiedenen Bewegungsachse Z bewegt wird und eine Steuereinheit vorgesehen ist, welche die zur Bewegung der Werkstückauflage vorgesehene Transportvorrichtung und die zur Bewegung der Servicevorrichtung vorgesehene maschinelle Bewegungseinheit steuert und dadurch die Bewegung der Werkstückauflage entlang der Transportachse X einerseits und die Bewegung der Servicevorrichtung entlang der Bewegungsachse Y und/oder entlang der Bewegungsachse Z andererseits miteinander koordiniert.

Nach der erfindungsgemäßen Lösung wird die räumliche Zuordnung des Werkzeuges zu der zu bearbeitenden Auflageleiste durch die Kombination und Koordination mindestens zweier Bewegungskomponenten realisiert, wovon eine durch die Transportvorrichtung der Bearbeitungsmaschine eingebracht wird. Danach wird die für die Positionierung der Werkstückauflage an der Bearbeitungsmaschine zur Verfügung stehende Transportvorrichtung in Doppelfunktion auch für die Bereitstellung einer Servicebewegung entlang der Transportachse X genutzt. Von einer Bewegungseinheit, welche die Servicevorrichtung hält und führt, wird ergänzend eine Bewegungskomponente für die Bewegung der Servicevorrichtung entlang einer Bewegungsachse Y und/oder eine Bewegungskomponente für die Bewegung der Servicevorrichtung entlang einer weiteren Bewegungsachse Z bereitgestellt. Die Bewegungseinheit kann beispielsweise von einem Portal mit entlang linearer Führungen verfahrbaren Bewegungskomponenten gebildet sein. Die Servicevorrichtung kann auch von einer Bewegungseinheit geführt werden, welche von einem schwenkbaren Träger mit drehbeweglichen Bewegungskomponenten gebildet ist oder welche eine Kombination der genannten Bewegungskomponenten aufweist. Sämtliche Bewegungskomponenten einschließlich der Bewegungskomponente der Transportvorrichtung werden mittels der Steuereinheit derart aufeinander abgestimmt, dass eine automatisierte Zuordnung des Werkzeuges der Servicevorrichtung zur Auflageleiste gewährleistet ist. Dabei sind sowohl Werkzeuge einsetzbar, die eine mechanische Bearbeitung der Auflageleiste bewirken, wie z.B. Bürsten-, Schleif-, Sandstrahl-, Schabe- oder Schlagwerkzeuge, als auch Werkzeuge zur thermischen Bearbeitung von Auflageleisten, wie z.B. Laserstrahl-Werkzeuge. Die Servicevorrichtung kann mit einem Werkzeug oder mit mehreren einheitlichen oder verschiedenen Werkzeugen ausgestattet sein. Entsprechend der Ausführung der verwendeten Servicevorrichtung wird durch die Bewegungseinheit der erfindungsgemäßen maschinellen Anordnung eine auf das Werkzeug oder die Werkzeuge abgestimmte Bewegung der Servicevorrichtung bereitgestellt. So kann das Werkzeug bzw. die Werkzeuge der Servicevorrichtung mittels der Bewegungseinheit in ausschließlich einer Bewegungsachse Y oder Z den Auflageleisten zugestellt werden, wie z.B. bei einer als Schabe- oder Schlagvorrichtung ausgeführten Serviceeinheit. Die umfassende Bearbeitung der Auflageleisten wird durch die ergänzende Bewegung der Werkstückauflage entlang der Transportachse X vervollständigt.

Die erfindungsgemäße Anordnung stellt eine konstruktiv einfache, platzsparende und effiziente Lösung dar.

Die Bewegungseinheit kann an einer beliebigen Stelle entlang der Transportachse X der Transportvorrichtung und somit insbesondere außerhalb des Arbeitsbereiches der Bearbeitungsmaschine angeordnet werden. Der Wartungs- und Reinigungsprozess an einer Werkstückauflage kann damit parallel und weitestgehend unabhängig von der Werkstückbearbeitung im Arbeitsbereich der Bearbeitungsmaschine erfolgen. Vorzugsweise wird die Bewegungseinheit mit der Servicevorrichtung an einer entlang der Transportachse X der Transportvorrichtung ausgebildeten Servicestation angeordnet. Die Servicestation für die Reinigung und Wartung der Werkstückauflagen ist beispielsweise einer Entladestation, an welcher das bearbeitete Werkstück vorn der Werkstückauflage entladen wird, in Transportrichtung der Werkstückauflage nachfolgend angeordnet oder einer Beladestation, an welcher die Werkstückauflage mit einem zu bearbeitenden Werkstück beladen wird, vorgeschaltet.

Vorteilhafte Ausgestaltungen und Weiterbildungen der Erfindung ergeben sich aus den abhängigen Patentansprüchen 2 bis 15, der nachfolgenden Beschreibung und den zugehörigen Zeichnungen.

Im Falle der bevorzugten Erfindungsbauart nach Patentanspruch 2 sind die Transportachse X und die Bewegungsachse Y parallel zur Auflageebene und die Bewegungsachse Z senkrecht zur Auflageebene gerichtet.

Damit wird eine Zuordnung der Bewegungsachsen der Servicevorrichtung zur Auflageebene der Werkstückauflage definiert, welche den Aufwand für die Koordinierung der aufeinander abzustimmenden Bewegungen und außerdem auch den für die Bewegungseinheit erforderlichen konstruktiven Aufwand gering hält. Bei dieser Zuordnung verlaufen zumindest die Transportachse X und die Bewegungsachse Z rechtwinklig zueinander. Ist zudem die Bewegungsachse Y rechtwinklig zur Transportachse X ausgerichtet, so verlaufen die in Rede stehenden Achsen in den drei kartesischen Koordinatenrichtungen des Raumes, was den Koordinations- und Konstruktionsaufwand weiter verringert. Vorzugsweise verläuft die Auflageebene ebenso wie die Transportachse X und die Bewegungsachse Y horizontal. Die Bewegungsachse Z ist dann vertikal ausgerichtet.

Sind die Auflageleisten nach Patentanspruch 3 parallel zur Transportachse X angeordnet, ermöglicht dies eine Bearbeitung der Auflageleisten, bei welcher das Werkzeug der Servicevorrichtung stationär den Auflageleisten zugeordnet ist, während die Werkstückauflage entlang der Transportachse X bewegt wird.

Sind nach Patentanspruch 4 die Auflageleisten parallel zur Bewegungsachse Y angeordnet, und somit winkelig, vorzugsweise senkrecht zur Transportachse X, so ermöglicht dies eine Bearbeitung der Auflageleisten, im Falle derer die Werkstückauflage während der Bearbeitung der Auflageleisten stationär fixiert ist und das Werkzeug an den stationären Auflageleisten entlang bewegt wird. Je nach Anwendungsfall wird die Ausführungsform nach Patentanspruch 3 oder die Ausführungsform nach Patentanspruch 4 gewählt.

In einer bevorzugten Ausgestaltung der Erfindung nach Patentanspruch 5 wird mittels der Steuereinheit die Werkstückauflage entlang der Transportachse X stetig bewegt und die Servicevorrichtung entlang der Bewegungsachse Y schrittweise mit einem Schrittmaß umgesetzt, das mit dem Mittenabstandsmaß der Auflageleisten oder einem Vielfachen dessen übereinstimmt. Somit wird ein automatisierter Bearbeitungssprozess zur Wartung oder Reinigung einer kompletten Werkstückauflage verwirklicht, welche mehrere parallel zur Transportachse X angeordnete Auflageleisten umfasst. Dabei steuert die Steuereinheit einen an der Transportvorrichtung vorhandenen Antrieb der Werkstückauflage derart an, dass eine stetige Relativbewegung der Auflageleisten in ihrer Längserstreckung gegenüber dem Werkzeug der stationären Servicevorrichtung erzeugt wird, wobei auch eine Vor- und Zurückbewegung der Auflageleisten eingeschlossen ist. Ergänzend hierzu steuert die Steuereinrichtung einen Y-Antrieb der Bewegungseinheit für die Zustellbewegung der Servicevorrichtung entlang der Bewegungsachse Y derart an, dass das Werkzeug durch getäktete Bewegung der Servicevorrichtung den Auflageleisten oder Gruppen von Auflageleisten nacheinander zugeordnet wird. Im Ergebnis ist die Bearbeitung der gesamten Werkstückauflage mit einem geringen konstruktiven Aufwand vollständig automatisierbar.

In weiterer bevorzugter Ausgestaltung der Erfindung nach Patentanspruch 6 wird mittels der Steuereinheit die Servicevorrichtung entlang der Bewegungsachse Y stetig bewegt und die Werkstückauflage entlang der Transportachse X schrittweise mit einem Schrittmaß zugestellt, das mit dem Mittenabstandsmaß der Auflageleisten oder einem Vielfachen dessen übereinstimmt. In Analogie zur vorbeschriebenen Ausführungsform wird hierbei ein automatisierter Bearbeitungsprozess zur Wartung oder Reinigung einer kompletten Werkstückauflage verwirklicht, die mehrere parallel zur Bewegungsachse Y angeordnete Auflageleisten umfasst. Dabei steuert die Steuereinheit den Y-Antrieb der Bewegungseinheit für die Bewegung der Servicevorrichtung entlang der Bewegungsachse Y derart an, dass eine stetige in Längserstreckung der Auflageleisten gerichtete Relativbewegung des Werkzeuges gegenüber den stationären Auflageleisten erfolgt, wobei auch eine Vor- und Zurückbewegung des Werkzeuges entlang den Auflageleisten erfindungsgemäß eingeschlossen ist. Kombiniert mit einer getakteten Positionierung der Werkstückauflage entlang der Transportachse X werden die Auflageleisten nacheinander dem Werkzeug zugeordnet, so dass auch in dieser Weise die Bearbeitung der gesamten Werkstückauflage mit einfachen konstruktiven Mitteln umfassend automatisierbar ist.

Wie aus Patentanspruch 7 hervorgeht, ist ein Werkzeugantrieb zum Antrieb des Werkzeuges vorgesehen, der eine eigenständige und von der Servicevorrichtung unabhängige Werkzeugbewegung des Werkzeuges zur Bearbeitung der Auflageleiste erzeugt. Insbesondere beim Einsatz von Werkzeugen zur mechanischen Bearbeitung der Auflageleisten wird hierdurch die Bearbeitung den Auflageleisten intensiviert. Ergänzend zu der an der Auflageleiste verrichteten mechanischen Arbeit des Werkzeuges durch die Kombination der Bewegung der Servicevorrichtung und der Positionierbewegung der Werkstückauflage, bearbeitet das autark angetriebene Werkzeug die Auflageleisten. Von der Erfindung wird dabei auch umfasst, dass die Antriebsrichtung des Werkzeugantriebes und damit die autarke Werkzeugbewegung umkehrbar ist.

Ist die durch den Werkzeugantrieb erzeugte autarke Werkzeugbewegung in Längserstreckung der Auflageleiste gerichtet, überlagern sich die Bewegungen zur Bearbeitung der Auflageleiste durch das Werkzeug derart, dass sich verschiedene vorteilhafte Bearbeitungswirkungen ergeben. Wenn zum Beispiel die Bewegung des mechanisch arbeitenden Werkzeuges der Bewegung der Auflageleisten entgegengerichtet ist, erhöht sich die resultierende Arbeitsgeschwindigkeit des Werkzeuges gegenüber der Auflageleiste, so dass dadurch die mechanische Arbeitsleistung gesteigert wird. Ist dagegen die Bewegung des Werkzeuges mit der Bewegungsrichtung, der Auflageleiste gleichgerichtet, bewirkt dies eine verringerte resultierende Arbeitsgeschwindigkeit des Werkzeuges gegenüber der Auflageleiste, die aber durch eine Erhöhung der Werkzeuggeschwindigkeit ausgeglichen werden kann.

Weicht nach Patentanspruch 8 die Werkzeuggeschwindigkeit von der Geschwindigkeit der Werkstückauflage und von der Geschwindigkeit der Servicevorrichtung ab, so ergibt sich mit einfachen Mitteln ein Wert der resultierenden Arbeitsgeschwindigkeit des Werkzeuges gegenüber den Auflageleisten, der von Null verschieden ist. Ist die Werkzeuggeschwindigkeit in dieser Weise bestimmt, garantiert dies beispielsweise beim Einsatz eines Schleifwerkzeuges eine Schleifleistung des Werkzeuges. Damit entfällt ein zusätzlicher Steuerungs- und Regelungsbedarf für die Werkzeuggeschwindigkeit.

Besonders effizient arbeitet eine Anordnung nach Patentanspruch 9, wenn mehrere gleichartige Werkzeuge vorgesehen sind, die einer Auflageleiste oder verschiedenen Auflageleisten zuordenbar sind. Damit können z.B. eine Auflageleiste an beiden Längsseiten oder verschiedene Auflageleisten entlang einer ihrer Längsseiten gleichzeitig bearbeitet werden.

Im Falle einer Anordnung nach Patentanspruch 10 kann die Effizienz dadurch gesteigert werden, dass mehrere verschiedenartig ausgebildete Werkzeuge vorgesehen sind, die einer, Auflageleiste oder verschiedenen Auflageleisten zuordenbar sind. Beispielsweise kann in Bewegungsrichtung der Servicevorrichtung entlang der Auflageleiste jeweils ein voreilendes erstes Werkzeug für die Grobreinigung oder Ausrichtung der Auflageleisten angeordnet und ausgebildet sein, während ein dem ersten Werkzeug nacheilendes zweites Werkzeug speziell zur Feinreinigung bzw. Endbearbeitung ausgebildet ist. Auch in dieser Ausführung können durch die Zuordnung der Werkzeuge zu verschiedenen Auflageleisten mehrere Auflageleisten gleichzeitig bearbeitet werden.

Die bevorzugten Ausführungsarten der maschinellen Anordnung nach den Patentansprüchen 11 bis 14 zeichnen sich durch eine besonders zweckmäßige und kompakte Bauweise der Servicevorrichtung aus.

Von besonderem Vorteil für die Automatisierung des Reinigungsprozesses sind die Merkmale nach Patentanspruch 15. Die Servicevorrichtung weist einen optischen Sensor mit einer Auswerteeinheit auf, wobei mit dem Sensor ein Istwert einer Auflageleistenkontur erfassbar und signalisierbar ist, und die Auswerteeinheit in Abhängigkeit von einem Sollwert der Auflageleistenkontur ein Steuersignal für die Steuereinheit generiert. Damit können die Auflageleisten einer Werkstückauflage vor, während oder nach einem Bearbeitungsprozess abgescannt und automatisch auf das Vorhandensein von Ablagerungen überprüft werden. Auf der Grundlage des Ergebnisses der Inspektion kann der nachfolgende Bearbeitungsprozess gestaltet werden. Beispielsweise kann ein Reinigungsprozess erst ab einem bestimmten Grad der Verunreinigung der Auflageleisten gestartet werden. Auch besteht die Möglichkeit, im Falle starker Verformungen der Auflageleisten der Leistenreinigung einen Richtvorgang vorzuschalten. Des Weiteren kann die Qualität des laufenden Bearbeitungsprozesses überwacht werden. Entsprechend dem Überwachungsergebnis lassen sich die Dauer und die Intensität des Bearbeitungsprozesses steuern.

Nachstehend wird die erfindungsgemäße Anordnung anhand schematischer Darstellungen zu zwei Ausführungsbeispielen näher erläutert. Es zeigen:
- Fig. 1: eine Seitenansicht einer maschinellen Anordnung in einer ersten Ausführung mit einer Servicevorrichtung und einer Bewegungseinheit in Verbindung mit einer Werkstückauflage mit Auflageleisten, die parallel zu einer Transportachse X angeordnet sind,
- Fig. 2: eine Ansicht A auf die Servicevorrichtung und die Werkstückauflage nach Fig. 1,
- Fig. 3: eine Draufsicht auf eine maschinelle Anordnung in einer zweiten Ausführung mit einer Servicevorrichtung und einer Bewegungseinheit in Verbindung mit einer Werkstückauflage mit Auflageleisten, die unter einem Winkel von 90° zur Transportachse X angeordnet sind.

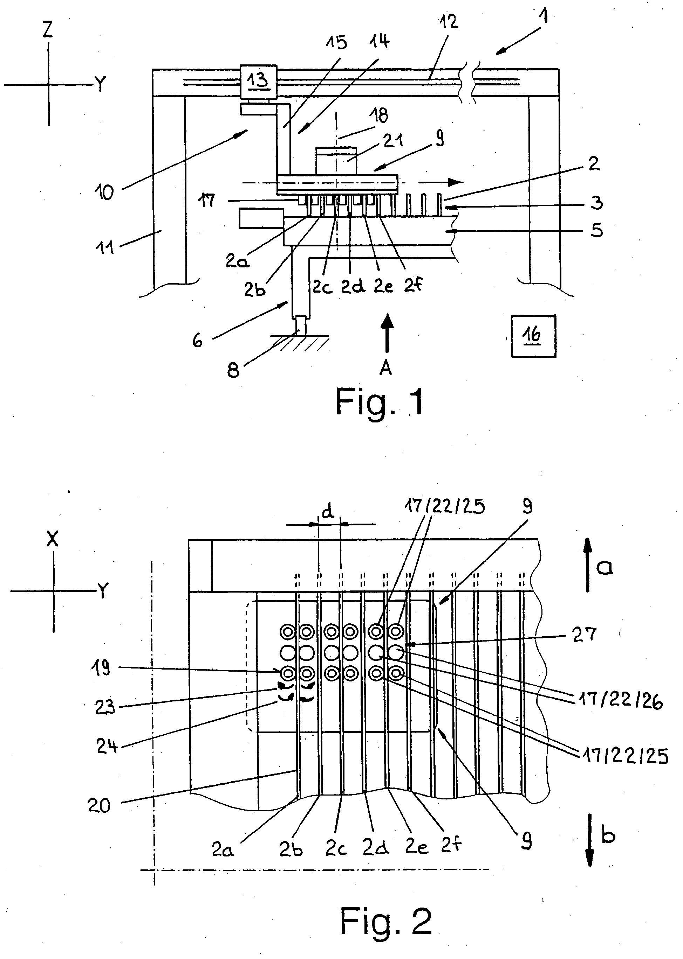

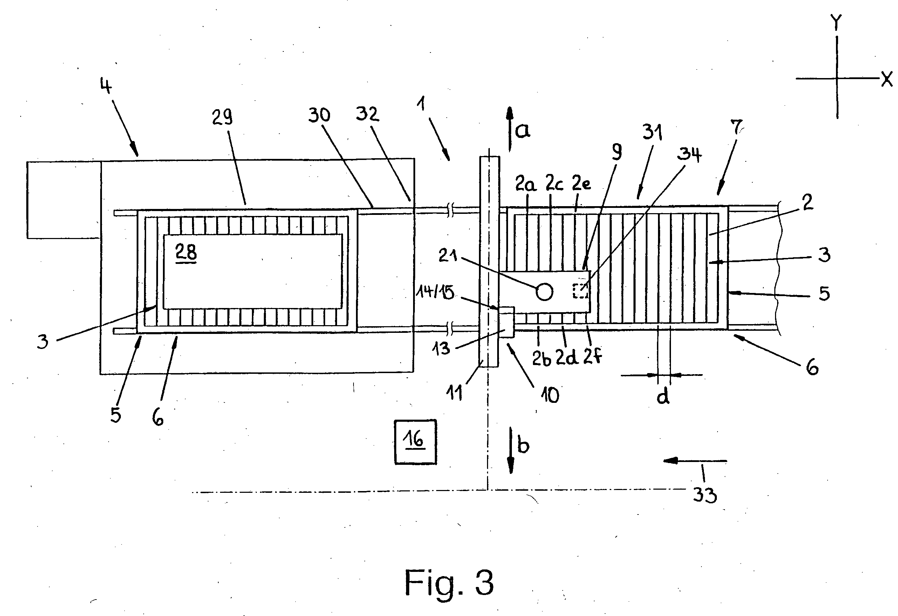

In den Fign. 1 und 2 ist eine maschinelle Anordnung 1 zum Reinigen von Auflageleisten 2 einer Werkstückauflage 3 dargestellt. Die Werkstückauflage 3, die aus mehreren parallel zueinander angeordneten und voneinander beabstandeten Auflageleisten 2 gebildet ist, dient der Lagerung von Blechwerkstücken, die, in einer Blechbearbeitungsmaschine, vorliegend in einer Laserschneidmaschine 4 (nur in Fig. 3 andeutungsweise dargestellt), thermisch geschnitten werden.

In eine Transportpalette 5 integriert, wird die Werkstückauflage 3 mittels einer Transportvorrichtung, hier andeutungsweise als schienengeführter Transportwagen 6 dargestellt, entlang einer horizontal ausgerichteten Transportachse X befördert, um die Bleche in einem Arbeitsbereich 29 der Laserschneidmaschine 4 und gegebenenfalls an weiteren Stationen, z.B. einer Be- und Entladestation 7 (Fig. 3), zu positionieren. Eine Schienenführung 8 für den Transportwagen 6 erstreckt sich parallel zu der Transportachse X, die in Fig. 1. senkrecht zur Zeichnungsebene verläuft. Die Auflageleisten 2 der Werkstückauflage 3 sind parallel zu der Transportachse X angeordnet.

Die maschinelle Anordnung 1 nach den Fign. 1 und 2 umfasst außerdem eine Servicevorrichtung 9, die von einer Bewegungseinheit 10 gehalten und geführt wird. Die Servicevorrichtung 9 wird mittels der Bewegungseinheit 10 entlang einer horizontal ausgerichteten Bewegungsachse Y und entlang einer vertikal ausgerichteten Bewegungsachse Z bewegt und dabei gegenüber der Transportpalette 5 mit der Werkstückauflage 3 zugestellt.

Die Bewegungseinheit 10 umfasst im Wesentlichen ein Portal 11 mit einer parallel zur Bewegungsachse Y angeordneten horizontalen Y-Führung 12, ferner einen Führungskopf 13, der an der Y-Führung 12 beweglich angeordnet ist, und einen Ausleger 14. Der Ausleger 14 weist eine parallel zur Bewegungsachse Z angeordnete vertikale Z-Führung 15 auf. Am Ausleger 14 ist die Servicevorrichtung 9 befestigt.

Außerdem umfasst die Bewegungseinheit 10 einen nicht näher dargestellten Y-Antrieb für die Bewegung der Servicevorrichtung 9 entlang der Y-Führung 12 und einen ebenfalls nicht dargestellten Z-Antrieb für die Bewegung der Servicevorrichtung 9 parallel zu der Z-Führung 15. Der Y-Antrieb ermöglicht ein Verfahren des Führungskopfes 13 entlang der Y-Führung 12 des Portals 11 und somit eine Zustellbewegung der Servicevorrichtung 9 entlang der horizontalen Bewegungsachse Y. Der Z-Antrieb ermöglicht eine Hub- und Senkbewegung des Auslegers 14 und damit eine Zustellbewegung der Servicevorrichtung 9 entlang der vertikalen Bewegungsachse Z. Die Schienenführung 8 des Transportwagens 5 sowie die Y-Führung 12 und die Z-Führung 15 der Bewegungseinheit 10 sind derart angeordnet, dass die Transportachse X der Werkstückauflage 3 und die Bewegungsachsen Y und Z der Servicevorrichtung 9 rechtwinklig zueinander verlaufen.

Eine andeutungsweise dargestellte Steuereinheit 16 koordiniert durch entsprechende Ansteuerung einen nicht gezeigten Antrieb des Transportwagens 6 sowie den Y- und den Z-Antrieb der Bewegungseinheit 10. Dadurch werden die Bewegung der Transportpalette 5 mit der Werkstückauflage 3 entlang der Transportachse X und die Bewegungen der Servicevorrichtung 9 entlang den Bewegungsachsen Y und Z aufeinander abgestimmt. So wird zur Durchführung eines Reinigungsprozesses die Transportpalette 5 mit der Werkstückauflage 3 entlang der Transportachse X stetig vor und zurück verfahren, während die Servicevorrichtung 9 zunächst ortsfest verweilt und dann schrittweise entlang der Bewegungsachse Y in der nachfolgend noch näher beschriebenen Art und Weise zugestellt bzw. umgesetzt wird.

Die Servicevorrichtung 9 weist als Werkzeuge mehrere Reinigungswalzen 17 auf, die sich in Figur 1 beim automatischen Reinigen der Auflageleisten 2 gleichzeitig an mehreren Auflageleisten 2a, 2c, 2e im Einsatz befinden. Jede der Reinigungswalzen 17 ist drehbar um eine Drehachse 18 gelagert, die parallel zur vertikal orientierten Bewegungsachse Z der Servicevorrichtüng 9 verläuft. Die Reinigungswalzen 17 können mit ihrer Mantelfläche 19 somit optimal jeweils an einer Längsseite 20 der senkrecht stehenden Auflageleisten 2a, 2c, 2e angelegt werden. Die Mantelfläche 19 jeder der Reinigungswalzen 17 weist ein riefenartiges Profil auf, das bei der Drehung der an den zugeordneten Auflageleisten 2a, 2c, 2e anliegenden Reinigungswalzen 17 eine Reinigung durch Abscheren, Zerquetschen oder Abschleifen der an den Auflageleisten 2a, 2c, 2e anhaftenden Verunreinigungen, beispielsweise von Schlackeresten, bewirkt. Die Drehbewegung der Reinigungswalzen 17 mit einer bestimmten Umfangsgeschwindigkeit wird durch einen in seiner Drehrichtung umsteuerbaren und einen Werkzeugantrieb bildenden Wälzenantrieb 21 erzeugt, der mittels eines Zahnradgetriebes die Antriebsenergie auf alle Reinigungswalzen 17 überträgt.

Aus Fig. 2, die auszugsweise eine Ansicht A von unten auf die Servicevorrichtung 9 und die Werkstückauflage 3 mit den Auflageleisten 2 wiedergibt, ist die Gesamtheit aller Reinigungswalzen 17 erkennbar. Wie hieraus gut ersichtlich ist, bilden jeweils zwei Reinigungswalzen 17, die an den beiden Längsseiten 20 einer Auflageleiste 2 einander gegenüberstehen, ein Reinigungswalzenpaar 22, wobei die Reinigungswalzen 17 eines Reinigungswalzenpaares 22 jeweils gegenläufig angetrieben sind.

Die Reinigungswalzen 17 sind verschiedenartig ausgebildet. Die Reinigungswalzen 17, welche zur groben Vorreinigung der Auflageleisten 2 verwendet werden, weisen eine grobe Struktur der Mantelfläche 19 auf und bilden Vorreinigungswalzen bzw. Vorreinigungswalzenpaare 25. Die Reinigungswalzen 17 zur End- bzw. Feinreinigung der Auflageleisten 2, bezeichnet als End- oder Feinreinigungswalzen, bzw. End- oder Feinreinigungswalzenpaare 26, weisen eine gegenüber den Vorreinigungswalzen feinere Struktur der Mantelfläche 19 auf. Zur Erzielung eines günstigen Reinigungseffektes rotieren die Feinreinigungswalzen mit einer anderen, vorzugsweise höheren, Geschwindigkeit als die Vorreinigungswalzen. Die Reinigungswalzen 17 der Vorreinigungswalzenpaare 25, werden in einer der Umlaufrichtung der Reinigungswalzen 17 der Feinreinigungswalzenpaare 26 entgegengesetzten Drehrichtung angetrieben.

Insgesamt weist die Servicevorrichtung 9 neun Reinigungswalzenpaare 22 mit insgesamt achtzehn Reinigungswalzen 17 auf, die gleichzeitig drei Auflageleisten 2a, 2c, 2e bearbeiten. Drei jeweils in Längserstreckung ein und der selben Auflageleiste 2a, 2c, 2e gereihte Reinigungswalzenpaare 22 ergeben einen von drei Reinigungswalzensätzen 27. Jeder Reinigungswalzensatz 27 besteht aus einem ersten und einem zweiten Vorreinigungswalzenpaar 25. Die Vorreinigungswalzenpaare 25 liegen am Rand des jeweiligen Reinigungswalzensatzes 27 und schließen ein mittig angeordnetes Feinreinigungswalzenpaar 26 ein.

Beim Zusammenspiel der Servicevorrichtung 9 und der Werkstückauflage 3 während des Reinigungsprozesses bewirkt eine Positionierbewegung der Transportpalette 5 entlang der Transportachse X (z.B. mit einer Bewegung in einer Vorwärtsrichtung a) eine lineare Relativbewegung der Auflageleisten 2a, 2c, 2e gegenüber den Reinigungswalzen 17 der dabei ortfesten Servicevorrichtung 9. Bei der Positionierbewegung der Auflageleisten 2 in Vorwärtsrichtung a bildet ein erstes Vorreinigungswalzenpaar 25, eines jeden Reinigungswalzensatzes 27 das voreilende Reinigungswalzenpaar 22, dem das Feinreinigungswalzenpaar 26 des betreffenden Reinigungswalzensatzes 27 nacheilt. Die Reinigungswalzen 17 des voreilenden Vorreinigungswalzenpaares 22 besitzen eine Drehrichtung, die eine der Positionierbewegung der Auflageleisten 2a, 2c, 2e entgegengerichtete Arbeitsbewegung der zur Vorreinigung genutzten Reinigungswalzen 17 ergibt. Damit kann durch das voreilende Vorreinigungswalzenpaar 25 eine intensive Grobreinigung der Auflageleisten 2a, 2c, 2e durchgeführt werden. Grobe Schlacke- und Materialreste werden durch die von den Auflageleisten 2a, 2c, 2e weg weisende Arbeitsbewegung in Drehrichtung der Reinigungswalzen 17 des voreilenden Vorreinigungswalzenpaares 25 effektiv abgelöst und sogleich aus dem Arbeitsbereich der Reinigungswalzen 17 geschleudert. Zudem bewirkt die der Positionierbewegung der Auflageleisten 2a, 2c, 2e entgegengerichtete Arbeitsbewegung eine Erhöhung der resultierenden Arbeitsgeschwindigkeit der Reinigungswalzen 17 des voreilenden Vorreinigungswalzenpaares 25 gegenüber den Auflageleisten 2a, 2c, 2e, was die Abtragsleistung der Reinigungswalzen 17 des voreilenden Vorreinigungswalzenpaares 25 beim Entfernen der Verunreinigungen verstärkt und damit die Reinigungswirkung steigert.

Die Reinigungswalzen 17 des nacheilenden Feinreinigungswalzenpaares 26 besitzen eine zu den Reinigungswalzen 17 des voreilenden Vorreinigungswalzenpaares 25 gegenläufige Drehrichtung. Dadurch ergibt sich eine mit der Positionierbewegung der Auflageleisten 2a, 2c, 2e in Vorwärtsrichtung a gleichgerichtete Arbeitsbewegung der Feinreinigungswalzen. Eine verglichen mit der Geschwindigkeit der Positionierbewegung der Auflageleisten 2 besonders hohe Umfangsgeschwindigkeit der Reinigungswalzen 17 des Feinreinigungswalzenpaares 26 wirkt in diesem Fall einer Absenkung der resultierende Arbeitsgeschwindigkeit entgegen, die sich ansonsten aufgrund der gleichgerichteten Bewegungen der Auflageleisten 2a, 2c, 2e und der Reinigungswalzen 17 des Feinreinigungswalzenpaares 26 ergäbe.

Sind im Laufe der stetigen Bewegung der Transportpalette 5 in Vorwärtsrichtung a die Auflageleisten 2a, 2c, 2e der Werkstückauflage 3 über ihre Gesamtlänge gereinigt, so wird mittels des Z-Antriebes die Servicevorrichtung 9 vertikal über die Auflageleisten 2a, 2c, 2e angehoben und mittels des Y-Antriebes entlang der Bewegungsachse Y mit einem Schrittmaß d weiter gerückt, das einem Mittenabstandsmaß zweier benachbarter Auflageleisten 2 entspricht. Damit wird die Servicevorrichtung 9 über zu reinigenden Auflageleisten 2b, 2d, 2f positioniert. Um die Auflageleisten 2b, 2d, 2f reinigen zu können, werden mit einer Absenkbewegung der Servicevorrichtung 9 die Reinigungswalzen 17 diesen Auflageleisten, 2b, 2d, 2f zugeordnet. Bei dem anschließenden Reinigungsvorgang bleibt die Servicevorrichtung 9 wiederum ortfest hinsichtlich der nunmehr entlang der Transportachse X erfolgenden Positionierbewegung der Transportpalette 5 in Rückwärtsrichtung b. Gleichzeitig wird durch eine Umschaltung des Walzenantriebes 21 auch die Drehrichtung aller Reinigungswalzen 17 umgekehrt. Das Profil der Mantelfläche 19 der Reinigungswalzen 17 ist derart gestaltet, dass es unabhängig von der Drehrichtung der Reinigungswalzen 17 eine Reinigungswirkung besitzt.

Bei der nun ausgeführten Positionierbewegung der Auflageleisten 2b, 2d, 2f in Rückwärtsrichtung- b bildet das zweite Vorreinigungswalzenpaar 25 eines jeden Reinigungswalzensatzes 27 das voreilende Vorreinigungswalzenpaar 25, dem das Feinreinigungswalzenpaär 26 des jeweiligen Reinigungswalzensatzes 27 nacheilt. Im Weiteren läuft der Reinigungsprozess während der Rückfahrt der Transportpalette 5 analog zu den vorbeschriebenen Funktionsabläufen ab.

Durch Wiederholung der beschriebenen Sequenz von Bewegungsabläufen wird mittels der Steuereinheit 16 ein automatisierter Reinigungsprozess absolviert, bis sämtliche Auflageleisten 2 der Werkstückauflage 3 gereinigt sind. Die genannte Sequenz von Bewegungsabläufen setzt sich dabei zusammen aus einer stetigen Vorfahrt der Transportpalette 5 in Richtung der Transportachse X, Umsetzen der Servicevorrichtung 9 mit Schrittmaß d in Richtung der Bewegungsachse Y, Drehrichtungsumkehr des Walzenantriebes 21, stetige Rückfahrt der Transportpalette 5 in Richtung der Transportachse X, erneutes Umsetzen der Servicevorrichtung 9 mit Schrittmaß d in Richtung der Bewegungsachse Y und Drehrichtungsumkehr des Walzenantriebes 21.

Die zweite Bauart der maschinellen Anordnung 1 umfasst nach Fig. 3 die Servicevorrichtung 9 und die Bewegungseinheit 10 in Verbindung mit einer Werkstückauflage 3, deren Auflageleisten 2 im Unterschied zum vorbeschriebenen Ausführungsbeispiel unter einem Winkel von 90° zur Transportachse X der Transportpalette 5 angeordnet sind.

Gleiche Bezugszeichen in den Figuren 1 bis 3 kennzeichnen gleiche Teile beider Ausführungsbeispiele.

Fig. 3 zeigt in einer Draufsicht die Laserschneidmaschine 4 mit dem Transportwagen 6, welcher die Transportpalette 5 mit einem auf der Werkstückauflage 3 aufliegenden unbearbeiteten Rohblech 28 entlang der Transportachse X aus einer Beladeposition an der Be- und Entladestation 7 einem Arbeitsbereich 29 der Laserschneidmaschine 4 zuführt. Die Werkstückauflage 3 bildet eine Auflageebene für das Rohblech 28 aus, die sich parallel zu der Zeichnungsebene von Figur 3 erstreckt. Nach der Bearbeitung wird das bearbeitete Werkstück in umgekehrter Richtung aus dem Arbeitsbereich 29 in eine Entladeposition an der Be- und Entladestation 7 abgeführt. Während sich eine Transportpalette 5 im Arbeitsbereich 29 befindet, kann eine weitere Transportpalette 5 in einer Beladeposition bzw. in einer Entladeposition angeordnet sein. Zur Positionierung werden die Transportpaletten 5 jeweils entlang einer parallel zur Transportachse X angeordneten Schienenführung 30 transportiert. Die Beladeposition und die Entladeposition befinden sich in Verlängerung der Schienenführung 30 außerhalb der Laserschneidmaschine 4. Eine höhenverstellbare Palettenwechseleinrichtung 31 herkömmlicher Bauart realisiert wechselweise die Beladeposition, bei der die Transportpalette 5. zum Beladen der Werkstückauflage 3 mit einem zu bearbeitenden Rohblech 28 zugänglich ist, sowie die Entladeposition, bei welcher die Transportpalette 5 zum Entladen eines bearbeiteten Bleches (nicht dargestellt) bereitgestellt wird. In einem ausreichend großen Zwischenraum zwischen einer Beschickungsöffnung 32 der Laserschneidmaschine 4 und der Palettenwechseleinrichtung 31 ist die analog dem vorhergehenden Ausführungsbeispiel gestaltete Bewegungseinheit 10 mit der in vorbeschriebener Weise gehaltenen und geführten Servicevorrichtung 9 angeordnet. In der Darstellung nach Fig. 3 finden sich das Portal 11, der Führungskopf 13 und der Ausleger 14 gemäß Figur 1 als Bestandteile der Bewegungseinheit 10 wieder.

Die Auflageleisten 2 der Werkstückauflage 3 erstrecken sich parallel zur horizontalen Bewegungsachse Y der Servicevorrichtung 9. Die Bewegungsachse Z verläuft senkrecht zur Zeichnungsebene von Fig. 3.

Die Steuereinheit 16 übernimmt zur Durchführung des Reinigungsprozesses wiederum die Koordination der Bewegung der Transportpalette 5 entlang der Transportachse X mit den Bewegungen der Servicevorrichtung 9 entlang den Bewegungsachsen Y und Z. Jedoch unterscheiden sich die Steuerungsabläufe vom vorhergehenden Ausführungsbeispiel insofern, als nunmehr die Servicevorrichtung 9 entlang der Bewegungsachse Y stetig hin und her verfahren wird, während die Transportpalette 5 mit der Werkstückauflage 3 zunächst ortsfest verweilt und danach schrittweise entlang der Transportachse X weitergesetzt wird.

Das Zusammenwirken der Servicevorrichtung 9 mit der Werkstückauflage 3 während des Reinigungsprozesses ist gegenüber dem vorhergehenden Ausführungsbeispiel dahingehend geändert, dass nunmehr eine kontinuierliche Bewegung der Servicevorrichtung 9 mit den Reinigungswalzen 17 gegenüber den dabei ortfesten Auflageleisten 2 ausgeführt wird. Die vorbeschriebene Gestaltung, Funktion und Wirkungsweise der Reinigungswalzen 17 und deren Zusammenwirken mit den Auflageleisten 2 treffen in analoger Weise auch auf das Ausführungsbeispiel gemäß Figur 3 zu.

Die Besonderheiten beim Ablauf des Reinigungsprozess mit der maschinellen Anordnung 1 nach Fig. 3 stellen sich wie folgt dar:

Die Reinigungswalzen 17 der Servicevorrichtung 9 werden in vorbeschriebenener Weise zunächst den Auflageleisten 2a, 2c, 2e der Werkstückauflage 3 zugeordnet. Dabei verbleibt die Transportpalette 5 ortsfest. Die Servicevorrichung 9 bewegt sich in Vorwärtsrichtung a entlang der horizontalen Y-Achse. Erreicht während dieser Bewegung die Servicevorrichtung 9 die Enden der Auflageleisten 2a, 2c, 2e der Werkstückauflage 3, so wird mittels des Z-Antriebes des Auslegers 14 die Servicevorrichtung 9 mit einer vertikalen Zustellbewegung parallel zu der Bewegungsachse Z über die Auflageleisten 2a, 2c, 2e angehoben. Der Antrieb des Transportwagens 6 setzt dann die Transportpalette 5 entlang der Transportachse X in Richtung auf die Laserschneidmaschine 4 um (vgl. Pfeil 33 in Figur 3). Das Umsetzen erfolgt mit einem Schrittmaß d, das dem Mittenabstand einander benachbarter Auflageleisten 2 entspricht. Damit wird die Servicevorrichtung 9 über den zu reinigenden Auflageleisten 2b, 2d, 2f positioniert. Zur Fortsetzung des Reinigungsprozesses werden mit einer absenkenden Zustellbewegung der Servicevorrichtung 9 parallel zur Zustellachse Z die Reinigungswalzen 17 den Auflageleisten 2b, 2d, 2f zugeordnet. Dabei bleibt die Transportpalette 5 wiederum ortfest. Die Servicevorrichtung 9 bewegt sich dann in Rückwärtsrichtung b entlang der Bewegungsachse Y. Zuvor wird durch eine Umschaltung des Walzenantriebes 21 die Drehrichtung aller Reinigungswalzen 17 gegenüber der Drehrichtung während der vorausgegangenen, in Vorwärtsrichtung a ausgeführten Arbeitsbewegung der Servicevorrichtung 9 umgekehrt.

Durch Wiederholung der beschriebenen Sequenz von Funktionsabläufen (stetige Bewegung der Servicevorrichtung 9 in Vorwärtsrichtung a, Umsetzen der Transportpalette 5 um das Schrittmaß d, Drehrichtungsumkehr des Walzenantriebes 21, stetige Bewegung der Servicevorrichtung 9 in Rückwärtsrichtung b, erneutes Umsetzen der Transportpalette 5 um das Schrittmaß d und Drehrichtungsumkehr des Walzenantriebes 21), wird der automatisierte Reinigungsprozess fortgesetzt, bis sämtliche Auflageleisten 2 der Werkstückauflage 3 gereinigt sind.

In Figur 3 stark schematisiert angedeutet ist ein optischer Sensor 34 der Servicevorrichtung 9. Mit Hilfe des optischen Sensors 34 werden vor dem Einleiten eines Reinigungsprozesses die Auflageleisten 2 der Werkstückauflage 3 auf das Vorhandensein von zu entfernenden Ablagerungen überprüft. Der optische Sensor 34 steht mit einer Auswerteeinheit der Steuereinheit 16 in Verbindung. Ein Reinigungsprozess der vorstehenden Art wird nur dann eingeleitet, wenn mittels des Sensors 34 eine entsprechende Verschmutzung der Auflageleisten 2 festgestellt wird.

Der beschriebene Reinigungsprozess kann zeitlich parallel zu einem Arbeitsprozess an der Laserschneidmaschine 4 ablaufen.

## Patentansprüche

1. Maschinelle Anordnung zur Wartung und/oder zur Reinigung von Auflageleisten (2) einer Werkstückauflage (3), die eine Auflageebene zur Lagerung von Werkstücken bildet, mit einer Transportvorrichtung (6) zur Bewegung der Werkstückauflage (3) entlang einer Transportachse X und mit einer Servicevorrichtung (9), welche Servicevorrichtung (9) ein Werkzeug (17) zur Wartung und/oder Reinigung der Auflageleisten (2) aufweist,
**dadurch gekennzeichnet, dass**
• eine maschinelle Bewegungseinheit (10) vorgesehen ist, welche geeignet ist, die Servicevorrichtung (9) in einer zur Transportachse X winkelig angeordneten Bewegungsachse Y und/oder in einer zur Transportachse X winkelig angeordneten, von der Bewegungsachse Y verschiedenen Bewegungsachse Z zu bewegen und **dass**
• eine Steuereinheit (16) vorgesehen ist, welche geeignet ist, die zur Bewegung der Werkstückauflage (3) vorgesehene Transportvorrichtung (6) und die zur Bewegung der Servicevorrichtung (9) vorgesehene maschinelle Bewegungseinheit (10) zu steuern und dadurch die Bewegung der Werkstückauflage (3) entlang der Transportachse X einerseits und die Bewegung der Servicevorrichtung (9) entlang der Bewegungsachse Y und/oder entlang der Bewegungsachse Z andererseits miteinander zu koordinieren.

2. Maschinelle Anordnung nach Anspruch 1, **dadurch gekennzeichnet, dass** die Transportachse X und die Bewegungsachse Y parallel zur Auflageebene der Werkstückauflage (3) gerichtet sind und die Bewegungsachse Z senkrecht zur Auflageebene der Werkstückauflage (3) gerichtet ist.

3. Maschinelle Anordnung nach einem der vorhergehenden Ansprüche, **dadurch gekennzeichnet, dass** die Auflageleisten (2) parallel zur Transportachse X anordenbar sind.

4. Maschinelle Anordnung nach einem der vorhergehenden Ansprüche, **dadurch gekennzeichnet, dass** die Auflageleisten (2) parallel zur Bewegungsachse Y anordenbar sind.

5. Maschinelle Anordnung nach einem der vorhergehenden Ansprüche, **dadurch gekennzeichnet, dass** die Steuereinheit (16) geeignet ist, die zur Bewegung der Werkstückauflage (3) vorgesehene Transportvorrichtung (6) und die zur Bewegung der Servicevorrichtung (9) vorgesehene maschinelle Bewegungseinheit (10) derart zu steuern, dass sich die Werkstückauflage (3) entlang der Transportachse X stetig bewegt und die Servicevorrichtung (9) entlang der Bewegungsachse Y schrittweise mit einem Schrittmaß (d) zugestellt wird, das mit einem Mittenabstandsmaß der Auflageleisten (2) oder einem Vielfachen dessen übereinstimmt.

6. Maschinelle Anordnung nach einem der vorhergehenden Ansprüche, **dadurch gekennzeichnet, dass** die Steuereinheit (16) geeignet ist, die zur Bewegung der Werkstückauflage (3) vorgesehene Transportvorrichtung (6) und die zur Bewegung der Servicevorrichtung (9) vorgesehene maschinelle Bewegungseinheit (10) derart zu steuern, dass sich die Servicevorrichtung (9) entlang der Bewegungsachse Y stetig bewegt und die Werkstückauflage (3) entlang der Transportachse X schrittweise mit einem Schrittmaß (d) zugestellt wird, das mit dem Mittenabstandsmaß der Auflageleisten (2) oder einem Vielfachen dessen übereinstimmt.

7. Maschinelle Anordnung nach einem der vorhergehenden Ansprüche, **dadurch gekennzeichnet, dass** ein Werkzeugantrieb (21) vorgesehen ist, der geeignet ist, eine Werkzeugbewegung des Werkzeuges (17) zur Bearbeitung der Auflageleisten (2) zu erzeugen, wobei die Werkzeugbewegung vorzugsweise in Längserstreckung der Auflageleisten (2) gerichtet ist.

8. Maschinelle Anordnung nach einem der vorhergehenden Ansprüche, **dadurch gekennzeichnet, dass** Mittel vorhanden sind zum Erhalten dass die Geschwindigkeit des Werkzeuges (17) von der Geschwindigkeit der Werkstückauflage (3) und von der Geschwindigkeit der Servicevorrichtung (9) abweicht.

9. Maschinelle Anordnung nach einem der vorhergehenden Ansprüche, **dadurch gekennzeichnet, dass** mehrere gleichartig ausgebildete Werkzeuge (17) vorgesehen sind, die einer Auflageleiste (2) oder verschiedenen Auflageleisten (2) zuordenbar sind.

10. Maschinelle Anordnung nach einem der vorhergehenden Ansprüche, **dadurch gekennzeichnet, dass** mehrere verschiedenartig ausgebildete Werkzeuge (17) vorgesehen sind, die einer Auflageleiste (2) oder verschiedenen Auflageleisten (2) zuordenbar sind.

11. Maschinelle Anordnung nach einem der vorhergehenden Ansprüche, **dadurch gekennzeichnet, dass** das Werkzeug (17) als Reinigungswalze ausgebildet ist, welche eine Mantelfläche (19) zur Anlage an einer Längsseite (20) der zugeordneten Auflageleiste (2) aufweist und welche geeignet ist, sich um eine parallel zur Zustellachse Z gerichtete Drehachse (18) zu drehen.

12. Maschinelle Anordnung nach einem der vorhergehenden Ansprüche, **dadurch gekennzeichnet, dass** jeweils zwei gleichartige Reinigungswalzen ein Reinigungswalzenpaar (22) bilden, dessen Reinigungswalzen an den sich gegenüberliegenden Längsseiten (20) einer Auflageleiste (2) anordenbar und mit gegenläufigen Drehrichtungen antreibbar sind.

13. Maschinelle Anordnung nach einem der vorhergehenden Ansprüche, **dadurch gekennzeichnet, dass** zwei als Vorreinigungswalzen ausgebildete Reinigungswalzen ein Vorreinigungswalzenpaar (25) zur Vorreinigung einer Auflageleiste (2) bilden und/oder dass zwei als Endreinigungswalzen ausgebildete Reinigungswalzen ein Endreinigungswalzenpaar (26) zur Endreinigung der Auflageleiste (2) bilden.

14. Maschinelle Anordnung nach einem der vorhergehenden Ansprüche, **dadurch gekennzeichnet, dass** vorzugsweise drei Reinigungswalzenpaare (22) einen Reinigungswalzensatz (27) bilden, wobei zwei Vorreinigungswalzenpaare (25) einem zwischen diesen angeordneten Endreinigungswalzenpaar (26) beidseits benachbart sind.

15. Maschinelle Anordnung nach einem der vorhergehenden Ansprüche, **dadurch gekennzeichnet, dass** die Servicevorrichtung (9) einen optischen Sensor (34) mit einer Auswerteeinheit aufweist, wobei der Sensor (34) geeignet ist, einen Istwert einer Auflageleistenkontur zu erfassen und zu signalisieren und wobei die Auswerteeinheit geeignet ist, in Abhängigkeit von einem Sollwert der Auflageleistenkontur ein Steuersignal für die Steuereinheit (16) zu generieren.

16. Bearbeitungsmaschine, insbesondere Blechbearbeitungsmaschine, welche Bearbeitungsmaschine eine maschinelle Anordnung (1) nach einem der vorhergehenden Ansprüche umfasst.

## Claims

1. Mechanical arrangement for the maintenance and/or cleaning of support strips (2) of a workpiece support (3) which forms a support plane for supporting workpieces, having a transport device (6) for moving the workpiece support (3) along a transport axis X and having a service device (9), which service device (9) comprises a tool (17) for the maintenance and/or cleaning of the support strips (2),
**characterized in that**
• a mechanical movement unit (10) is provided which is suitable for moving the service device (9) in a movement axis Y arranged at an angle to the transport axis X and/or in a movement axis Z arranged at an angle to the transport axis X, which movement axis Z differs from the movement axis Y, and that
• a control unit (16) is provided which is suitable for controlling the transport device (6) provided to move the workpiece support (3) and for controlling the mechanical movement unit (10) provided to move the service device (9) and thereby to coordinate with one another the movement of the workpiece support (3) along the transport axis X, on the one hand, and the movement of the service device (9) along the movement axis Y and/or along the movement axis Z, on the other hand.

2. Mechanical arrangement according to Claim 1, **characterized in that** the transport axis X and the movement axis Y are directed parallel to the support plane of the workpiece support (3) and the movement axis Z is directed perpendicularly to the support plane of the workpiece support (3).

3. Mechanical arrangement according to any one of the preceding claims, **characterized in that** the support strips (2) can be arranged parallel to the transport axis X.

4. Mechanical arrangement according to any one of the preceding claims, **characterized in that** the support strips (2) can be arranged parallel to the movement axis Y.

5. Mechanical arrangement according to any one of the preceding claims, **characterized in that** the control unit (16) is suitable for controlling the transport device (6) provided to move the workpiece support (3) and the mechanical movement unit (10) provided to move the service device (9), in such a manner that the workpiece support (3) moves continuously along the transport axis X and the service device (9) is positioned step by step along the movement axis Y with a step dimension (d) which corresponds to a centre distance dimension of the support strips (2) or to a multiple thereof.

6. Mechanical arrangement according to any one of the preceding claims, **characterized in that** the control unit (16) is suitable for controlling the transport device (6) provided to move the workpiece support (3) and the mechanical movement unit (10) provided to move the service device (9), in such a manner that the service device (9) moves continuously along the movement axis Y and the workpiece support (3) is positioned step by step along the transport axis X with a step dimension (d) which corresponds to the centre distance dimension of the support strips (2) or to a multiple thereof.

7. Mechanical arrangement according to any one of the preceding claims, **characterized in that** a tool drive (21) is provided which is suitable for producing a tool movement of the tool (17) for working the support strips (2), wherein the tool movement is preferably directed in the longitudinal extension of the support strips (2).

8. Mechanical arrangement according to any one of the preceding claims, **characterized in that** means are provided to ensure that the speed of the tool (17) differs from the speed of the workpiece support (3) and from the speed of the service device (9).

9. Mechanical arrangement according to any one of the preceding claims, **characterized in that** a plurality of identically configured tools (17) is provided which can be assigned to a support strip (2) or different support strips (2).

10. Mechanical arrangement according to any one of the preceding claims, **characterized in that** a plurality of differently configured tools (17) is provided which can be assigned to a support strip (2) or to different support strips (2).

11. Mechanical arrangement according to any one of the preceding claims, **characterized in that** the tool (17) is configured as a cleaning roller which has a lateral surface (19) for bearing against a longitudinal side (20) of the assigned support strip (2) and which is suitable for rotating about a rotational axis (18) directed parallel to the positioning axis Z.

12. Mechanical arrangement according to any one of the preceding claims, **characterized in that** two identical cleaning rollers in each case form a cleaning roller pair (22), the cleaning rollers whereof can be arranged on the longitudinal sides (20) of a support strip (2) lying opposite one another and can be driven in opposite rotational directions.

13. Mechanical arrangement according to any one of the preceding claims, **characterized in that** two cleaning rollers configured as pre-cleaning rollers form a pre-cleaning roller pair (25) for pre-cleaning a support strip (2) and/or that two cleaning rollers configured as final cleaning rollers form a final cleaning roller pair (26) for the final cleaning of the support strip (2).

14. Mechanical arrangement according to any one of the preceding claims, **characterized in that** preferably three cleaning roller pairs (22) form a cleaning roller set (27), wherein two pre-cleaning roller pairs (25) are adjacent on both sides to a final cleaning roller pair (26) arranged between them.

15. Mechanical arrangement according to any one of the preceding claims, **characterized in that** the service device (9) comprises an optical sensor (34) with an evaluation unit, wherein the sensor (34) is suitable for detecting and signalling an actual value for a support strip contour and wherein the evaluation unit is suitable for generating a control signal for the control unit (16), depending on a target value for the support strip contour.

16. Processing machine, in particular a sheet metal processing machine, which processing machine comprises a mechanical arrangement (1) according to any one of the preceding claims.

## Revendications

1. Agencement automatique dévolu à l'entretien et/ou au nettoyage de barrettes d'appui (2) d'un support (3) de pièces à usiner qui forme un plan d'appui destiné à la mise en place de pièces à usiner, comprenant un dispositif de transport (6) dédié à la mise en mouvement dudit support (3) de pièces le long d'un axe de transport X, et un dispositif de maintenance (9), lequel dispositif de maintenance (9) est muni d'un outil (17) affecté à l'entretien et/ou au nettoyage desdites barrettes d'appui (2),
**caractérisé**
• **par** la présence d'une unité automatique (10) de mise en mouvement, apte à mouvoir le dispositif de maintenance (9) suivant un axe de mouvement Y décrivant un angle avec l'axe de transport X, et/ou suivant un axe de mouvement Z qui diffère dudit axe de mouvement Y et décrit un angle avec ledit axe de transport X ; et
• par la présence d'une unité de commande (16) apte à commander le dispositif de transport (6) prévu pour mouvoir le support (3) de pièces à usiner, et ladite unité automatique (10) de mise en mouvement prévue pour mouvoir le dispositif de maintenance (9), en coordonnant mutuellement, de la sorte, d'une part le mouvement dudit support (3) de pièces le long dudit axe de transport X et, d'autre part, le mouvement dudit dispositif de maintenance (9) le long dudit axe de mouvement Y et/ou le long dudit axe de mouvement Z.

2. Agencement automatique selon la revendication 1, **caractérisé par le fait que** l'axe de transport X et l'axe de mouvement Y sont dirigés parallèlement au plan d'appui du support (3) de pièces à usiner, et l'axe de mouvement Z est dirigé perpendiculairement audit plan d'appui dudit support (3) de pièces à usiner.

3. Agencement automatique selon l'une des revendications précédentes, **caractérisé par le fait que** les barrettes d'appui (2) peuvent être placées parallèlement à l'axe de transport X.

4. Agencement automatique selon l'une des revendications précédentes, **caractérisé par le fait que** les barrettes d'appui (2) peuvent être placées parallèlement à l'axe de mouvement Y.

5. Agencement automatique selon l'une des revendications précédentes, **caractérisé par le fait que** l'unité de commande (16) est apte à commander le dispositif de transport (6) prévu pour mouvoir le support (3) de pièces à usiner, et l'unité automatique (10) de mise en mouvement prévue pour mouvoir le dispositif de maintenance (9), de façon telle que ledit support (3) de pièces à usiner se meuve en permanence le long de l'axe de transport X et que ledit dispositif de maintenance (9) soit présenté en mode progressif, le long de l'axe de mouvement Y, avec une cote de progression (d) coïncidant avec une cote d'entraxe des barrettes d'appui (2), ou avec un multiple de cette dernière.

6. Agencement automatique selon l'une des revendications précédentes, **caractérisé par le fait que** l'unité de commande (16) est apte à commander le dispositif de transport (6) prévu pour mouvoir le support (3) de pièces à usiner, et l'unité automatique (10) de mise en mouvement prévue pour mouvoir le dispositif de maintenance (9), de façon telle que ledit dispositif de maintenance (9) se meuve en permanence le long de l'axe de mouvement Y et que ledit support (3) de pièces à usiner soit présenté en mode progressif, le long de l'axe de transport X, avec une cote de progression (d) coïncidant avec la cote d'entraxe des barrettes d'appui (2), ou avec un multiple de cette dernière.

7. Agencement automatique selon l'une des revendications précédentes, **caractérisé par** la présence d'un entraînement (21) d'outils, apte à engendrer un mouvement de l'outil (17) dédié au traitement des barrettes d'appui (2), ledit mouvement de l'outil étant dirigé, de préférence, suivant l'étendue longitudinale desdites barrettes d'appui (2).

8. Agencement automatique selon l'une des revendications précédentes, **caractérisé par** la présence de moyens conçus pour faire en sorte que la vitesse de l'outil (17) soit différente de la vitesse du support (3) de pièces à usiner, et de la vitesse du dispositif de maintenance (9).

9. Agencement automatique selon l'une des revendications précédentes, **caractérisé par** la présence de plusieurs outils (17) offrant des réalisations de même type, pouvant être assignés à une barrette d'appui (2) ou à différentes barrettes d'appui (2).

10. Agencement automatique selon l'une des revendications précédentes, **caractérisé par** la présence de plusieurs outils (17) offrant des réalisations de types différents, pouvant être assignés à une barrette d'appui (2) ou à différentes barrettes d'appui (2).

11. Agencement automatique selon l'une des revendications précédentes, **caractérisé par le fait que** l'outil (17) est réalisé sous la forme d'un rouleau de nettoyage qui est doté d'une surface d'enveloppe (19) conçue pour venir s'appliquer contre un côté longitudinal (20) de la barrette d'appui (2) assignée, et est apte à tourner autour d'un axe de rotation (18) dirigé parallèlement à l'axe de présentation Z.

12. Agencement automatique selon l'une des revendications précédentes, **caractérisé par le fait que** deux rouleaux de nettoyage de même type forment, à chaque fois, une paire (22) de rouleaux de nettoyage dont les rouleaux de nettoyage peuvent être placés au niveau des côtés longitudinaux (20) d'une barrette d'appui (2), tournés à l'opposé, et peuvent être entraînés avec des sens de rotation inverses.

13. Agencement automatique selon l'une des revendications précédentes, **caractérisé par le fait que** deux rouleaux de nettoyage, réalisés sous la forme de rouleaux de nettoyage préalable, forment une paire (25) de rouleaux de nettoyage préalable affectée au nettoyage préalable d'une barrette d'appui (2) ; et/ou **par le fait que** deux rouleaux de nettoyage, réalisés sous la forme de rouleaux de nettoyage définitif, forment une paire (26) de rouleaux de nettoyage définitif affectée au nettoyage définitif de ladite barrette d'appui (2).

14. Agencement automatique selon l'une des revendications précédentes, **caractérisé par le fait que**, de préférence, trois paires (22) de rouleaux de nettoyage forment un jeu (27) de rouleaux de nettoyage, deux paires (25) de rouleaux de nettoyage préalable étant situées, de part et d'autre, au voisinage d'une paire (26) de rouleaux de nettoyage définitif qui est interposée entre elles.

15. Agencement automatique selon l'une des revendications précédentes, **caractérisé par le fait que** le dispositif de maintenance (9) présente un capteur optique (34) conjugué à une unité d'évaluation, ledit capteur (34) étant apte à détecter et à signaliser une valeur réelle d'un profil de barrette d'appui, et ladite unité d'évaluation étant apte à engendrer, en fonction d'une valeur de consigne dudit profil de barrette d'appui, un signal de commande destiné à l'unité de commande (16).

16. Machine d'usinage, en particulier machine d'usinage de tôles, ladite machine d'usinage incluant un agencement automatique (1) conforme à l'une des revendications précédentes.
